# EUROPÄISCHE PATENTSCHRIFT

(11) **EP 2 849 963 B1**
(45) Veröffentlichungstag und Bekanntmachung des Hinweises auf die Patenterteilung: **18.01.2017**
(21) Anmeldenummer: 13719400.7
(22) Anmeldetag: 30.04.2013
(51) Int. Cl.: B60K 37/06

(54) **VORRICHTUNG ZUR ANZEIGE VON INFORMATIONEN IN EINEM HYBRIDFAHRZEUG**
DEVICE FOR DISPLAYING INFORMATION IN A HYBRID VEHICLE
DISPOSITIF D'AFFICHAGE D'INFORMATIONS DANS UN VÉHICULE HYBRIDE

(30) Priorität: 16.05.2012 DE 102012009736
(43) Veröffentlichungstag der Anmeldung: 25.03.2015
(73) Patentinhaber: Audi AG, 85045 Ingolstadt (DE)
(72) Erfinder: LIMBACHER, Reimund, 85055 Ingolstadt (DE); SCHIELE, Günter, 85116 Egweil (DE); XIONG, Yaokui, 85057 Ingolstadt (DE); GUTMAYER, Benjamin, 85080 Gaimersheim (DE)
(74) Vertreter: Brandt, Kai
(86) Internationale Anmeldenummer: PCT/EP2013/001285
(87) Internationale Veröffentlichungsnummer: WO 2013/170928

(56) Entgegenhaltungen:
- DE-A1-102010 020 673
- US-A1- 2009 125 173

## Beschreibung

Die Erfindung betrifft eine Vorrichtung zur Anzeige von Informationen in einem Hybridfahrzeug nach der im Oberbegriff von Anspruch 1 näher definierten Art.

Hybridfahrzeuge, also Kraftfahrzeuge, die sowohl einen Verbrennungsmotor als auch einen Elektromotor aufweisen und die alternativ ausschließlich mit dem Verbrennungsmotor, ausschließlich mit dem Elektromotor oder sowohl mit dem Verbrennungsmotor als auch mit dem Elektromotor angetrieben werden können, sind aus dem allgemeinen Stand der Technik bekannt und erfahren in jüngster Zeit eine größere Verbreitung. Ein besonderer Vorteil dieser Hybridfahrzeuge liegt darin, dass es möglich ist, zum Antrieb derselben lediglich den Elektromotor zu verwenden, wodurch ein gleichermaßen leiser wie emissionsfreier Betrieb derselben möglich ist. Hierzu weisen bekannte Hybridfahrzeuge, wie beispielsweise ein von der Anmelderin unter der Bezeichnung "Q5 hybrid" bezeichnetes Hybridfahrzeug, einen Schalter bzw. eine Taste auf, die der Fahrer betätigen kann, um einen reinen Elektroantrieb des Hybridfahrzeugs, also einen Betrieb, in dem das Hybridfahrzeug ausschließlich durch den Elektromotor angetrieben wird, herbeizuführen. Für einen solchen rein elektrischen Betrieb des Hybridfahrzeugs müssen jedoch bestimmte Bedingungen erfüllt sein. Da ein rein elektrischer Betrieb des Hybridfahrzeugs meist bereits dann verhindert wird, wenn eine der Bedingungen nicht erfüllt ist, kommt es in der Praxis häufig zu Situationen, in denen der Fahrer zwar die Taste für das rein elektrische Fahren betätigt, ein solcher Betrieb jedoch nicht möglich ist und dies dem Fahrer beispielsweise in dem Anzeigeinstrument angezeigt wird. Für den Fahrer kann dies zum Einen enttäuschend sein und es kann ihn zum Anderen davon abhalten, in Zukunft die Taste für das rein elektrische Fahren zu betätigen.

Problematisch ist außerdem, dass die Bedingungen, die für ein rein elektrisches Fahren vorliegen müssen, sehr komplex sind und daher vom Fahrer nicht direkt erkennbar und auch nicht nachvollziehbar sind, so dass es nicht zielführend ist, dem Fahrer diese Bedingungen anzuzeigen.

Eine Anzeigevorrichtung für ein Hybridfahrzeug ist in der EP 2 082 913 A1 beschrieben. Hierbei weist ein Anzeigeinstrument einen Balken auf, der eine variable Länge aufweisen kann, um einem Fahrer die Leistung des Hybridfahrzeugs in einem als EV-Modus bezeichneten, rein elektrischen Betrieb des Hybridfahrzeugs anzuzeigen.

Aus der DE 10 2008 060 265 A1 ist eine Anzeigeeinrichtung für ein Hybridfahrzeug bekannt, bei der dem Fahrer mit einem entsprechenden Symbol angezeigt wird, wenn bei Über- oder Unterschreiten einer bestimmten Temperatur nur ein eingeschränkter Betrieb der Fahrzeugbatterie möglich ist. Des Weiteren weist die Anzeigeeinrichtung eine Batterieladeanzeige auf.

Eine Vorrichtung zur Überwachung der Antriebsleistung bei einem Hybridfahrzeug ist in der DE 195 33 829 C1 beschrieben. Dabei ist ein Anzeigeinstrument vorgesehen, das eine Bereichsmarkierung für die momentane Antriebsleistung aufweist, deren Position veränderbar ist. Dadurch wird dem Fahrer eine durch ein Zuschalten des Elektromotors erreichbare Leistung angezeigt.

Die US 2009/0125173 A1 zeigt eine Anzeigeeinheit in einem Hybridfahrzeug mit einem Tachometer, zur Anzeige der Temperatur und zur Anzeige der Zusammenarbeit von dem Verbrennungsmotor und dem Elektromotor.

Eine Anzeigevorrichtung für ein Hybridelektrofahrzeug ist in der gattungsbildenden DE 10 2010 020 673 A1 beschrieben. Die Anzeigevorrichtung weist einen ersten und zweiten Anzeigebereich auf, welche einen ersten und zweiten Hybridmodus des Hybridfahrzeugs darstellen. Dabei ist eine Anzeige von Information vorgesehen, mittels derer einer Bedienperson vermittelt werden kann, wie nahe sich das Hybridelektrofahrzeug am Eintritt in einen Elektrofahrzeugmodus oder einem Verlassen dieses Modus befindet.

Es ist Aufgabe der vorliegenden Erfindung, eine Vorrichtung zur Anzeige von Informationen in einem Hybridfahrzeug zu schaffen, die es dem Fahrer des Hybridfahrzeugs erlaubt, zu erkennen, wenn ein rein elektrischer Betrieb des Hybridfahrzeugs möglich ist.

Erfindungsgemäß wird diese Aufgabe durch die in Anspruch 1 genannten Merkmale gelöst.

Durch den erfindungsgemäß in dem Anzeigeinstrument vorgesehenen Anzeigebereich kann dem Fahrer angezeigt werden, ob ein Antrieb des Hybridfahrzeugs ausschließlich durch den Elektromotor, also ein rein elektrisches Fahren des Hybridfahrzeugs, möglich ist. Dadurch ist der Fahrer des mit der erfindungsgemäßen Vorrichtung ausgestatteten Hybridfahrzeugs stets darüber informiert, ob er sein Hybridfahrzeug rein elektrisch betreiben kann und es wird verhindert, dass der Fahrer unter Umständen mehrmals vergeblich eine Taste betätigt, die ein rein elektrisches Fahren des Hybridfahrzeugs ermöglichen soll. Letztendlich wird dadurch erreicht, dass der Fahrer dazu angeregt wird, den ausschließlichen Antrieb des Hybridfahrzeugs durch den Elektromotor herbeizuführen, wenn dies möglich ist.

Um dem Fahrer anzuzeigen, wie weit er von der Möglichkeit entfernt ist, den Antrieb des Hybridfahrzeugs ausschließlich durch den Elektromotor zu erreichen, kann in einer vorteilhaften Weiterbildung der Erfindung vorgesehen sein, dass der Anzeigebereich in mehrere Abschnitte unterteilt ist, wobei mittels der Abschnitte der Grad der Verfügbarkeit von elektrischen Antriebskomponenten des Hybridfahrzeugs für einen rein elektrischen Antrieb des Hybridfahrzeugs anzeigbar ist.

Dabei kann eine sehr übersichtliche und klare Darstellung des Anzeigebereichs erreicht werden, wenn die mehreren Abschnitte des Anzeigebereichs durch jeweilige Leuchtelemente gebildet sind.

Alternativ dazu ist es in einer anderen Ausführungsform jedoch auch möglich, dass das Anzeigeinstrument einen Zeiger aufweist, der über den Anzeigebereich bewegbar ist.

Eine sehr einfache und damit kostengünstig zu realisierende Ausführungsform der Erfindung kann darin bestehen, dass der Anzeigebereich ein einzelnes Leuchtelement aufweist.

Weitere vorteilhafte Ausgestaltungen und Weiterbildungen der Erfindung ergeben sich aus den restlichen Unteransprüchen. Nachfolgend sind Ausführungsbeispiele der Erfindung anhand der Zeichnung prinzipmäßig dargestellt.

Es zeigt:
- Fig. 1: eine sehr schematische Darstellung eines Hybridfahrzeugs mit der erfindungsgemäßen Vorrichtung;
- Fig. 2: eine erste Ausführungsform der erfindungsgemäßen Vorrichtung;
- Fig. 3: eine zweite Ausführungsform der erfindungsgemäßen Vorrichtung; und
- Fig. 4: eine dritte Ausführungsform der erfindungsgemäßen Vorrichtung.

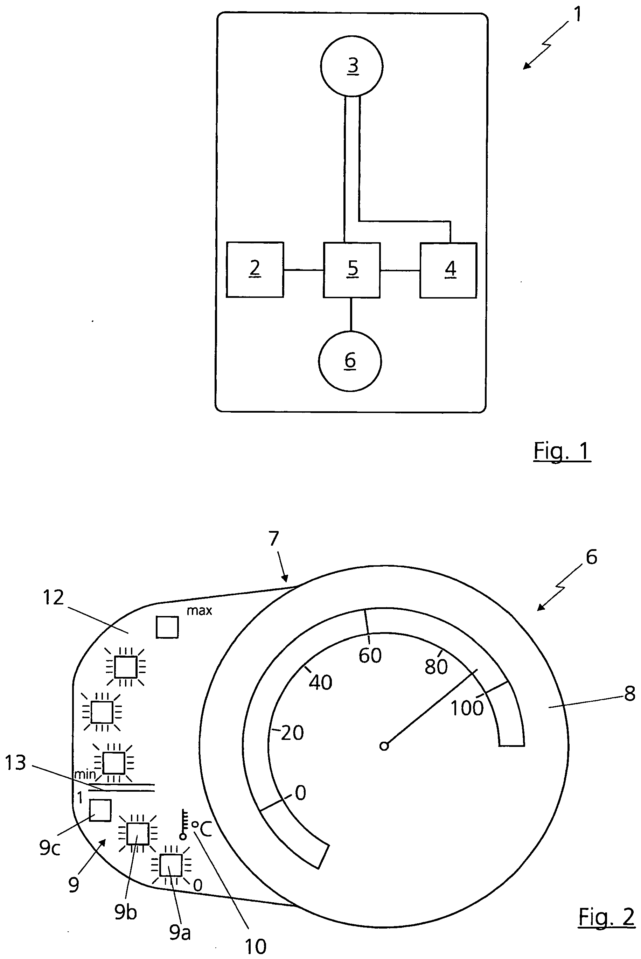

Fig. 1 zeigt eine sehr schematische Darstellung eines Hybridfahrzeugs 1, welches zu seinem Antrieb einen Verbrennungsmotor 2 und einen Elektromotor 3 aufweist. Prinzipiell könnte das Hybridfahrzeug 1 auch mehr als den einen Elektromotor 3 aufweisen. Das Hybridfahrzeug 1 weist des Weiteren eine Traktionsbatterie 4 auf, welche den Elektromotor 3 in an sich bekannter Weise mit elektrischer Energie versorgt. Ferner ist eine beispielsweise als Motorsteuergerät ausgebildete oder in ein Motorsteuergerät integrierte Steuereinrichtung 5 vorgesehen, welche verschiedene, an sich bekannte Funktionen übernehmen kann und hierzu im vorliegenden Fall mit dem Verbrennungsmotor 2, dem Elektromotor 3 und der Traktionsbatterie 4 verbunden ist. Des Weiteren ist die Steuereinrichtung 5 mit einer Vorrichtung 6 zur Anzeige von Informationen verbunden, die sich vorzugsweise in einem nicht dargestellten Passagierraum des Hybridfahrzeugs 1 befindet. Der in Fig. 1 dargestellte Aufbau des Hybridfahrzeugs ist als rein beispielhaft anzusehen und die nachfolgend beschriebene Vorrichtung 6 könnte auch bei andersartigen Hybridfahrzeugen eingesetzt werden.

In den Figuren 2, 3 und 4 sind verschiedene Ausführungsformen der Vorrichtung 6 zur Anzeige von Informationen in dem Hybridfahrzeug dargestellt. Die Vorrichtung 6 ist vorzugsweise Teil einer in ihrer Gesamtheit nicht dargestellten Instrumententafel des Hybridfahrzeugs 1 und weist ein Anzeigeinstrument 7 auf, welches mehrere Bereiche zum Anzeigen des aktuellen Betriebszustands des Verbrennungsmotos 2 und des Elektromotors 3 des Hybridfahrzeugs aufweist. Der in den Figuren 2, 3 und 4 den rechten Teil des Anzeigeinstruments 7 bildende Bereich 8 des Anzeigeinstruments 7 zeigt im vorliegenden Fall den Betriebszustand des Elektromotors 3 an. Da dieser Bereich 8 des Anzeigeinstruments 7 in einer beispielweise aus dem Hybridfahrzeug "Q5 hybrid" bekannten Art und Weise ausgebildet sein kann, wird auf denselben nachfolgend nicht näher eingegangen. Bei sämtlichen Ausführungsformen der Figuren 2, 3 und 4 ist der Bereich 8 des Anzeigeinstruments 7 identisch ausgeführt. Dies ist jedoch nicht unbedingt erforderlich und es sind auch andere Kombinationen des nachfolgend beschriebenen Anzeigeinstruments 7 möglich.

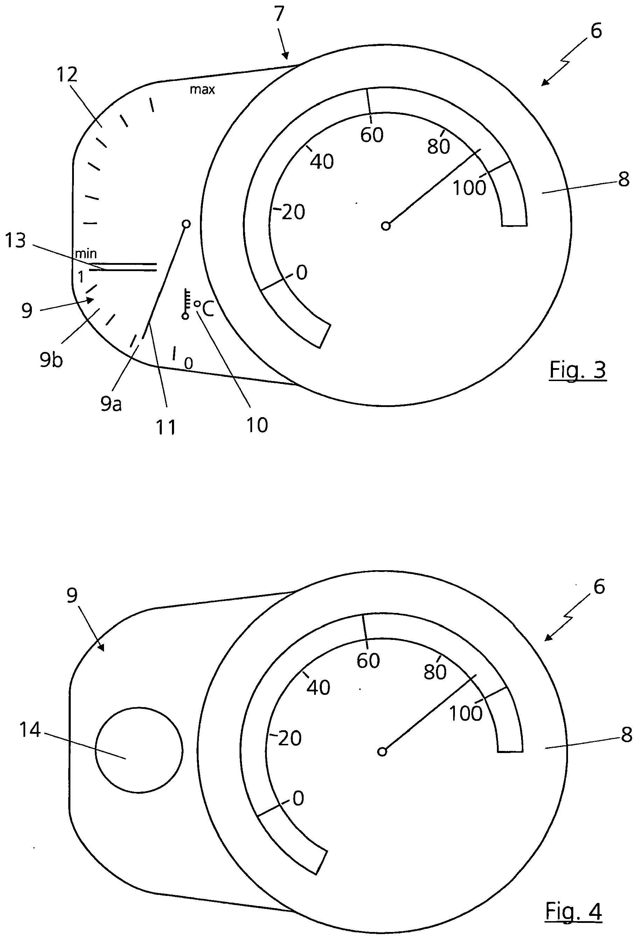

Des Weiteren weist das Anzeigeinstrument 7 einen Anzeigebereich 9 auf, der bei den einzelnen Ausführungsformen der Figuren 2, 3 und 4 jeweils unterschiedlich ausgeführt ist und der sich im vorliegenden Fall an den Bereich 8 des Anzeigeinstruments 7 anschließt. In dem Anzeigebereich 9 kann dem Fahrer des Hybridfahrzeugs 1 angezeigt werden, ob ein Antrieb des Hybridfahrzeugs 1 ausschließlich durch den Elektromotor 3, also ohne den Einsatz des Verbrennungsmotors 2, möglich ist. Hierzu ist bei den Ausführungsformen der Figuren 2 und 3 der Anzeigebereich 9 in mehrere Abschnitte 9a, 9b, ... unterteilt. In der Ausführungsform gemäß Fig. 2 sind dabei beispielhaft drei Abschnitte 9a, 9b und 9c dargestellt, wohingegen bei der Ausführungsform von Fig. 3 lediglich zwei Abschnitte 9a und 9b vorgesehen sind. Grundsätzlich ist die Anzahl der Abschnitte 9a, 9b, ... des Anzeigebereichs 9 jedoch beliebig und sie kann von verschiedenen Faktoren abhängen. Mittels der Abschnitte 9a, 9b, ... kann der Grad der Verfügbarkeit von elektrischen Antriebskomponenten des Hybridfahrzeugs 1, also unter anderem des Elektromotors 3, jedoch auch weiterer, an sich bekannter elektrischer Antriebskomponenten des Hybridfahrzeugs 1, für einen rein elektrischen Antrieb des Hybridfahrzeugs 1 angezeigt werden. In den Figuren 2 und 3 ist in dem Anzeigebereich 9 außerdem ein Symbol 10 vorgesehen, welches auf die Temperaturabhängigkeit der elektrischen Antriebskomponenten des Hybridfahrzeugs 1 hinweist und in einer einfachen Ausführungsform lediglich aufgedruckt sein kann. Auch eine Beleuchtung des Symbols 10 ist denkbar.

Bei der Ausführungsform von Fig. 2 sind die Abschnitte 9a, 9b und 9c des Anzeigebereichs durch jeweilige Leuchtelemente gebildet, die beispielsweise als LEDs ausgeführt sein können. Die einzelnen Abschnitte 9a, 9b und 9c des Anzeigebereichs 9 können dabei jeweils einem der nachfolgend genannten Verhinderungsgründe zum rein elektrischen Betrieb des Hybridfahrzeugs 1 zugeordnet sein. Aus der Anzahl der beleuchteten Abschnitte 9a, 9b und 9c kann der Fahrer erkennen, wie weit er von dem rein elektrischen Betrieb des Hybridfahrzeugs 1 entfernt ist, d.h. wie lange es ungefähr dauern wird, bis es möglich ist, das Hybridfahrzeug 1 ausschließlich durch den Elektromotor 3 anzutreiben. Im vorliegenden Fall sind zum Beispiel die beiden Abschnitte 9a und 9b beleuchtet, wohingegen der Abschnitt 9c nicht beleuchtet ist. Dadurch wird dem Fahrer signalisiert, dass es derzeit nicht möglich ist, das Hybridfahrzeug 1 ausschließlich durch den Elektromotor 3 anzutreiben. In nicht dargestellter Weise können die die Abschnitte 9a, 9b und 9c bildenden Leuchtelemente unterschiedliche Farben aufweisen, die unterschiedlichen Gründen zugeordnet sind, welche die nicht vorhandene Möglichkeit des ausschließlichen Antriebs des Hybridfahrzeugs 1 durch den Elektromotor 3 anzeigen.

Als Gründe, warum das Hybridfahrzeug 1 nicht ausschließlich durch den Elektromotor 3 angetrieben werden kann, können unter anderem die Temperatur der Traktionsbatterie 4, der Ladezustand der Traktionsbatterie 4, die Verfügbarkeit eines nicht dargestellten Startersystems für den Verbrennungsmotor 2, die Höhe des Hybridfahrzeugs 1 über dem Meeresspiegel und der damit verbundene Luftdruck, die Fahrgeschwindigkeit des Hybridfahrzeugs 1 oder die Temperatur weiterer am Antrieb des Hybridfahrzeugs 1 beteiligter Bauteile genannt werden.

Zur Überprüfung, ob sämtliche erforderlichen Kriterien zum ausschließlichen Betrieb des Hybridfahrzeugs 1 mit dem Elektromotor 3 erfüllt sind, greift die Steuereinrichtung 5 auf diese Kriterien zurück und sorgt dann dafür, dass dem Fahrer in dem Anzeigebereich 9 des Anzeigeinstruments 7 angezeigt wird, ob das Hybridfahrzeug 1 ausschließlich mit dem Elektromotor 3, d.h. ohne den Verbrennungsmotor 2, betrieben werden kann. Wenn dies der Fall ist, d. h. wenn dem Fahrer auf dem Anzeigebereich 9 angezeigt wird, dass dieser rein elektrische Betrieb des Hybridfahrzeugs 1 möglich ist, kann er eine nicht dargestellte Taste innerhalb des Hybridfahrzeugs 1 betätigen, die dann den rein elektrischen Betrieb des Hybridfahrzeugs 1 herstellt.

Die oben genannten Kriterien sowie die Ermittlung derselben durch die Steuereinrichtung 5 und die sich anschließende Steuerung des Elektromotors 3 und des Verbrennungsmotors 2 durch die Steuereinrichtung 5 gelten auch für die in den Figuren 3 und 4 dargestellten Ausführungsformen des Anzeigeinstruments 7.

Bei der Ausführungsform von Fig. 3 weist das Anzeigeinstrument 7 einen Zeiger 11 auf, der über den Anzeigebereich 9 bewegbar ist. Vorzugsweise hängt die Position des Zeigers 11 auf dem Anzeigebereich 9 von der aktuellen Verfügbarkeit des Elektromotors 3 bzw. der elektrischen Antriebskomponenten des Hybridfahrzeugs 1 ab. Da der Anzeigebereich 9 bei der Ausführungsform von Fig. 3 wie oben beschrieben die beiden Abschnitte 9a und 9b aufweist, kann ein Fahrer aus der Position des Zeigers 11 erkennen, wie weit er von dem rein elektrischen Betrieb des Hybridfahrzeugs 1 entfernt ist. Dabei ist der Zeiger 11 vorzugsweise stufenlos über den Anzeigebereich 12 bewegbar.

Bei den Ausführungsformen des Anzeigeinstruments 7 gemäß der Figuren 2 und 3 schließt sich an den Anzeigebereich 9 zur Anzeige des ausschließlichen Antriebs des Hybridfahrzeugs 1 durch den Elektromotor 3 unmittelbar ein weiterer Bereich 12 des Anzeigeinstruments 7 an. In diesem Bereich 12, der einen Teilbereich des Anzeigebereichs 9 darstellt, können zum Beispiel weitere Informationen über den Zustand der Traktionsbatterie 4, beispielsweise über den Ladezustand derselben, angezeigt werden, so dass der Fahrer erkennt, wie lange der rein elektrische Betrieb noch möglich ist. Des Weiteren kann dem Fahrer zum Beispiel in dem Bereich 12 auch eine theoretisch mögliche Reichweite angezeigt werden, welche das Hybridfahrzeug 1 im rein elektrischen Betrieb zurücklegen kann.

Bei der Ausführungsform von Fig. 2 sind in dem Bereich 12 mehrere weitere Leuchtelemente, die zum Beispiel als LEDs ausgeführt sein können, vorgesehen. Die Anzahl der beleuchteten Leuchtelemente in dem Bereich 12 gibt dem Fahrer im vorliegenden Fall Informationen über den Ladezustand der Traktionsbatterie 4. Auch die Leuchtelemente in dem Bereich 12 bilden somit einen Skalenwert. Die Leuchtelemente in dem Bereich 12 können eine andere Farbe aufweisen als diejenigen Leuchtelemente, die die Abschnitte 9a, 9b und 9c des Anzeigebereichs 9 bilden. Aus der beispielhaften Situation gemäß Fig. 2, in der drei Leuchtelemente in dem Bereich 12 beleuchtet sind, ist ersichtlich, dass dem Fahrer auch dann der Ladezustand der Traktionsbatterie 4 angezeigt werden kann, wenn der rein elektrische Betrieb des Hybridfahrzeugs 1 nicht möglich ist. Dabei kann vorgesehen sein, dass die Leuchtelemente in dem Bereich 12 nur schwach leuchten bzw. gedimmt sind, wenn der rein elektrische Betrieb des Hybridfahrzeugs 1 nicht möglich ist. Gegebenenfalls ist es auch möglich, dass die Leuchtelemente in dem Bereich 12 nicht leuchten, wenn der rein elektrische Betrieb des Hybridfahrzeugs 1 nicht möglich ist, d.h. dass die Leuchtelemente in dem Bereich 12 nur dann leuchten können, wenn sämtliche die Abschnitte 9a, 9b und 9c bildenden Leuchtelemente leuchten.

Bei der Ausführungsform von Fig. 3 bewegt sich der Zeiger 11 auch in den Bereich 12, nämlich dann, wenn der Antrieb des Hybridfahrzeugs 1 ausschließlich durch den Elektromotor 3 möglich ist.

Zwischen dem Anzeigebereich 9 und dem sich daran anschließenden Bereich 12 ist den Ausführungsformen von Fig. 2 und Fig. 3 im vorliegenden Fall eine optische Trennung in Form einer Begrenzungslinie 13 vorgesehen, die in diesem Fall zwei einzelne Linien aufweist. Das Aufleuchten sämtlicher in dem Anzeigebereich 9 angeordneter Leuchtelemente bei der Ausführungsform von Fig. 2 bzw. das Überschreiten der Begrenzungslinie 13 durch den Zeiger 11 bei der Ausführungsform von Fig. 3 zeigt dem Fahrer an, dass ein rein elektrischer Betrieb des Hybridfahrzeugs 1 möglich ist oder dass das Hybridfahrzeug 1 bereits rein elektrisch betrieben wird.

Das untere Ende des Anzeigebereichs 9 ist bei beiden Ausführungsformen der Figuren 2 und 3 durch die Ziffer "0" und das obere, also der Begrenzungslinie 13 zugewandte Ende durch die Ziffer "1" kenntlich gemacht. Dadurch kann der Fahrer noch klarer erkennen, wann der rein elektrische Betrieb des Hybridfahrzeugs 1 möglich ist. In ähnlicher Weise befindet sich am unteren, also der Begrenzungslinie 13 zugewandten Ende des Bereichs 12 die Angabe "min", wohingegen das obere Ende des Bereichs 12 die Angabe "max" aufweist. Auf diese Weise wird dem Fahrer der Ladezustand der Traktionsbatterie 4 noch deutlicher angezeigt. Selbstverständlich wären jeweils auch andere Darstellungsmöglichkeiten denkbar.

Fig. 4 zeigt eine vergleichsweise einfache Ausführungsform des Anzeigebereichs 9, der dort lediglich ein einzelnes Leuchtelement 14 aufweist, welches in der Lage ist, die Verfügbarkeit des ausschließlichen Antriebs des Hybridfahrzeugs 1 durch den Elektromotor 3 anzuzeigen. Bei dieser Ausführungsform ist der Anzeigebereich 9 mit dem Leuchtelement 14 von dem Bereich 8 des Anzeigeinstruments 7 unabhängig.

## Patentansprüche

1. Vorrichtung zur Anzeige von Informationen in einem Hybridfahrzeug, mit einem Anzeigeinstrument, welches mehrere Bereiche zum Anzeigen des aktuellen Betriebszustands wenigstens eines Verbrennungsmotors und wenigstens eines Elektromotors des Hybridfahrzeugs aufweist, und mit wenigstens einer Taste zur Herbeiführung eines Betriebs des Hybridfahrzeugs ausschließlich mittels des Elektromotors,
**dadurch gekennzeichnet, dass**
das Anzeigeinstrument (7) einen Anzeigebereich (9) aufweist, in dem anzeigbar ist, ob ein Antrieb des Hybridfahrzeugs (1) ausschließlich durch den Elektromotor (3) möglich ist.

2. Vorrichtung nach Anspruch 1,
**dadurch gekennzeichnet, dass**
der Anzeigebereich (9) in mehrere Abschnitte (9a,9b,...) unterteilt ist, wobei mittels der Abschnitte (9a,9b,...) der Grad der Verfügbarkeit von elektrischen Antriebskomponenten des Hybridfahrzeugs (1) für einen rein elektrischen Antrieb des Hybridfahrzeugs (1) anzeigbar ist.

3. Vorrichtung nach Anspruch 2,
**dadurch gekennzeichnet, dass**
die mehreren Abschnitte (9a,9b,...) des Anzeigebereichs (9) durch jeweilige Leuchtelemente gebildet sind.

4. Vorrichtung nach Anspruch 1 oder 2,
**dadurch gekennzeichnet, dass**
das Anzeigeinstrument (7) einen Zeiger (11) aufweist, der über den Anzeigebereich (9) bewegbar ist.

5. Vorrichtung nach Anspruch 4,
**dadurch gekennzeichnet, dass**
die Position des Zeigers (11) auf dem Anzeigebereich (9) vom Grad der Verfügbarkeit der elektrischen Antriebskomponenten des Hybridfahrzeugs (1) abhängt.

6. Vorrichtung nach Anspruch 1,
**dadurch gekennzeichnet, dass**
der Anzeigebereich (9) ein einzelnes Leuchtelement (14) aufweist.

7. Vorrichtung nach einem der Ansprüche 1 bis 6,
**dadurch gekennzeichnet, dass**
in dem Anzeigebereich (9) ein Symbol (10) vorgesehen ist, welches auf die Temperaturabhängigkeit von elektrischen Antriebskomponenten des Hybridfahrzeugs (1) hinweist.

8. Vorrichtung nach einem der Ansprüche 1 bis 7,
**dadurch gekennzeichnet, dass**
der Anzeigebereich (9) von den weiteren Bereichen (8) des Anzeigeinstruments (7) unabhängig ist.

9. Vorrichtung nach einem der Ansprüche 1 bis 7,
**dadurch gekennzeichnet, dass**
der Anzeigebereich (9) sich an wenigstens einen der weiteren Bereiche (8) des Anzeigeinstruments (7) anschließt.

10. Vorrichtung nach einem der Ansprüche 1 bis 9,
**dadurch gekennzeichnet, dass**
das Anzeigeinstrument (7) mit einer Steuereinrichtung (5) verbunden ist, wobei die Steuereinrichtung (5) ermittelt, ob das Hybridfahrzeug (1) ausschließlich mit dem wenigstens einen Elektromotor (3) betreibbar ist, und wobei die Steuereinrichtung (5) zur Ermittlung auf Kriterien zurückgreift, die aus der Gruppe ausgewählt sind, die die Temperatur einer Traktionsbatterie (4), den Ladezustand einer Traktionsbatterie (4), die Verfügbarkeit eines Startersystems für den Verbrennungsmotor (2), die Höhe des Hybridfahrzeugs (1) über dem Meeresspiegel die Fahrgeschwindigkeit des Hybridfahrzeugs (1) und die Temperatur weiterer am Antrieb des Hybridfahrzeugs (1) beteiligter Bauteile umfasst.

## Claims

1. Device for displaying information in a hybrid vehicle, having a display instrument comprising a plurality of regions for displaying the current operational state of at least one combustion engine and at least one electric motor of the hybrid vehicle, and having at least one button to effect an operation of the hybrid vehicle exclusively by means of the electric motor, **characterised in that** the display instrument (7) comprises a display region (9) in which it can be displayed whether driving the hybrid vehicle (1) is possible exclusively by means of the electric motor (3).

2. Device according to claim 1, **characterised in that** the display region (9) is divided into a plurality of sections (9a, 9b,...), wherein the degree of availability of electric drive components of the hybrid vehicle (1) for purely electric driving of the hybrid vehicle (1) can be displayed by means of the sections (9a, 9b,...).

3. Device according to claim 2, **characterised in that** the plurality of sections (9a, 9b,...) of the display region (9) are formed by respective light elements.

4. Device according to claim 1 or 2, **characterised in that** the display instrument (7) comprises a pointer (11) which can be moved over the display region (9).

5. Device according to claim 4, **characterised in that** the position of the pointer (11) on the display region (9) depends on the degree of availability of the electric drive components of the hybrid vehicle (1).

6. Device according to claim 1, **characterised in that** the display region (9) comprises a single light element (14).

7. Device according to any one of claims 1 to 6, **characterised in that** a symbol (10) is provided in the display region (9), which indicates the temperature dependency of electric drive components of the hybrid vehicle (1).

8. Device according to any one of claims 1 to 7, **characterised in that** the display region (9) is independent of the further regions (8) of the display instrument (7).

9. Device according to any one of claims 1 to 7, **characterised in that** the display region (9) is attached to at least one of the further regions (8) of the display instrument (7).

10. Device according to any one of claims 1 to 9, **characterised in that** the display instrument (7) is connected to a control device (5), wherein the control device (5) determines whether the hybrid vehicle (1) can be operated exclusively with the at least one electric motor (3) and wherein in order to determine this, the control device (5) refers to criteria which are selected from the group comprising the temperature of a traction battery (4), the charge state of a traction battery (4), the availability of a starter system for the combustion engine (2), the height of the hybrid vehicle (1) above sea level, the speed of the hybrid vehicle (1) and the temperature of further components involved in driving the hybrid vehicle (1).

## Revendications

1. Dispositif servant à afficher des informations dans un véhicule hybride, avec un instrument d'affichage, qui présente plusieurs zones servant à afficher l'état de fonctionnement instantané au moins d'un moteur à combustion interne et au moins d'un moteur électrique du véhicule hybride, et avec au moins une touche servant à déclencher un fonctionnement du véhicule hybride exclusivement au moyen du moteur électrique,
**caractérisé en ce que**
l'instrument d'affichage (7) présente une zone d'affichage (9), dans laquelle on peut afficher si un entraînement du véhicule hybride (1) exclusivement par le moteur électrique (3) est possible.

2. Dispositif selon la revendication 1,
**caractérisé en ce que**
la zone d'affichage (9) est divisée en plusieurs tronçons (9a, 9b, ...), le degré de disponibilité de composants d'entraînement électriques du véhicule hybride (1) pour un entraînement purement électrique du véhicule hybride (1) pouvant être affiché au moyen des tronçons (9a, 9b, ...).

3. Dispositif selon la revendication 2,
**caractérisé en ce que**
les plusieurs tronçons (9a, 9b, ...) de la zone d'affichage (9) sont formés par des éléments luminescents respectifs.

4. Dispositif selon la revendication 1 ou 2,
**caractérisé en ce que**
l'instrument d'affichage (7) présente un pointeur (11), qui peut être déplacé au-dessus de la zone d'affichage (9).

5. Dispositif selon la revendication 4,
**caractérisé en ce que**
la position du pointeur (11) sur la zone d'affichage (9) dépend du degré de disponibilité des composants d'entraînement électriques du véhicule hybride (1).

6. Dispositif selon la revendication 1,
**caractérisé en ce que**
la zone d'affichage (9) présente un seul élément luminescent (14).

7. Dispositif selon l'une quelconque des revendications 1 à 6,
**caractérisé en ce que**
est prévu dans la zone d'affichage (9) un symbole (10), qui indique la dépendance à la température de composants d'entraînement électriques du véhicule hybride (1).

8. Dispositif selon l'une quelconque des revendications 1 à 7,
**caractérisé en ce que**
la zone d'affichage (9) est indépendante des autres zones (8) de l'instrument d'affichage (7).

9. Dispositif selon l'une quelconque des revendications 1 à 7,
**caractérisé en ce que**
la zone d'affichage (9) se situe dans le prolongement d'au moins une des autres zones (8) de l'instrument d'affichage (7).

10. Dispositif selon l'une quelconque des revendications 1 à 9,
**caractérisé en ce que**
l'instrument d'affichage (7) est relié à un système de commande (5), le système de commande (5) déterminant si le véhicule hybride (1) peut fonctionner exclusivement avec l'au moins un moteur électrique (3) et le système de commande (5) ayant recours pour ladite détermination à des critères, qui sont choisis parmi le groupe, qui comprend la température d'une batterie de traction (4), l'état de charge d'une batterie de traction (4), la disponibilité d'un système démarreur pour le moteur à combustion interne (2), l'altitude du véhicule hybride (1) au-dessus du niveau de la mer, la vitesse de déplacement du véhicule hybride (1) et la température d'autres composants participant à l'entraînement du véhicule hybride (1).
